# EUROPEAN PATENT SPECIFICATION

(11) **EP 2 889 073 B1**
(45) Date of publication and mention of the grant of the patent: **02.09.2020**
(21) Application number: 14200211.2
(22) Date of filing: 23.12.2014
(51) Int. Cl.: B01D 53/14

(54) **ACID GAS REMOVAL METHOD**
VERFAHREN ZUR ENTFERNUNG VON SAUERGASEN
PROCÉDÉ D'ÉLIMINATION DE GAZ ACIDES

(30) Priority: 25.12.2013 JP 2013267493
(43) Date of publication of application: 01.07.2015
(73) Proprietor: Kabushiki Kaisha Toshiba, Tokyo 105-8001 (JP)
(72) Inventor: Murai, Shinji, Minato-ku, Tokyo (JP); Muramatsu, Takehiko, Minato-ku, Tokyo (JP); Ogawa, Takeshi, Minato-ku, Tokyo (JP); Saito, Satoshi, Minato-ku, Tokyo (JP)
(74) Representative: Moreland, David

(56) References cited:
- EP-A1- 2 193 833
- EP-A2- 2 468 385
- US-A1- 2009 199 709
- US-A1- 2013 118 350

## Description

### FIELD

Embodiments described herein relate generally to an acid gas removal method.

### BACKGROUND

In recent years, a greenhouse effect resulting from an increase in carbon dioxide (CO₂) concentration has been pointed out as a cause of global warming phenomena, and there is an urgent need to devise an international countermeasure to protect environment in a global scale. Industrial activities have a large responsibility as a generation source of CO₂, and there is a trend to suppress discharge of CO₂.

As technologies to suppress the increase of the concentration of acid gas, typically, CO₂, there are a development of energy saving products, a separation and recovery technology of discharged acid gas, technologies to use the acid gas as a resource and to isolate and store the acid gas, a switching to alternate energies such as natural energy, atomic energy, and so on which do not discharge the acid gas, and so on. As the separation and recovery technology of the acid gas, there are an absorption process, a suction process, a membrane separation process, a cryogenic process, and so on. Among them, the absorption process is suitable for processing a large amount of gas, and its application in a factory and a power station is considered.

In particular, at facilities such as a thermal power station using fossil fuels such as coal, coal oil, and natural gas, a method in which exhaust combustion gas generated when the fossil fuel is burned is brought into contact with a chemical absorbent, and thereby CO₂ in the exhaust combustion gas is removed and recovered, and further a method of storing the recovered CO₂ are performed. Further, there is proposed to remove acid gas such as hydrogen sulfide (H₂S) other than CO₂ by using the chemical absorbent.

As the chemical absorbent used in the absorption process, amino alcohols typified by monoethanolamine (MEA) have been used because MEA is economical and it is easy to increase a removal apparatus in size in the absorption process. Further, a study on a chemical absorbent using the amino alcohols having structural steric hindrance has been tried because selectivity for acid gas is very high and energy required for regeneration of the absorbent (hereinafter, to be referred to as "regeneration energy") is small. In this case, for example, gas containing carbon dioxide gas is brought into contact with an alkanolamine solution in an absorption tower to absorb the carbon dioxide gas, and thereafter, a whole quantity of the carbon dioxide gas absorbing liquid is heated, and the carbon dioxide gas is desorbed and recovered at a desorption tower.

As stated above, though a lot of attempts to reduce the regeneration energy of the absorbent are tried by using amino alcohols for the chemical absorbent, a chemical absorbent and a regeneration method enabling further reduction in the regeneration energy have been required.

As the regeneration method to lower the regeneration energy of the absorbent, a method in which the chemical absorbent that has absorbed CO₂ gas is phase-separated into solid and liquid (solid-liquid phase separation) or phase-separated into liquid and liquid (liquid-liquid phase separation), to regenerate a phase whose CO₂ concentration is high has been studied. As a regeneration method in the solid-liquid phase separation, a method to form a solid reaction product by absorbing the CO₂ gas has been proposed. However, the solid reaction product is difficult to be transferred to a regeneration tower compared to a liquid absorbent that has absorbed the CO₂ gas. As a regeneration method in the liquid-liquid phase separation, a method in which an amine compound dissolved in a non-water-soluble solvent is reacted with the CO₂ gas is known, and where the CO₂ gas is absorbed by the amine compound dissolved in a non-water-soluble organic solvent or a water-soluble amine compound.

Further, as the regeneration method in the liquid-liquid phase separation, a method using a demixing absorbing liquid having a characteristic of being divided when an absorbing liquid containing an acidic compound is heated has been proposed. In this method, after the acid gas absorption, an acid gas absorbing liquid is distilled, a part of the acid gas absorbing liquid is separated into two phases of a fraction rich in the acidic compound and a fraction lean in the acidic compound, the fraction rich in the acidic compound is distilled again to regenerate the absorbing liquid, to thereby suppress energy necessary for regeneration of the absorbing liquid.

US 2009/199709 A1 relates to of a method of deacidizing a gaseous effluent.

EP 2468385 A2 relates to an acid gas absorbent, an acid gas removal device, and an acid gas removal method using the acid gas absorbent.

### BRIEF DESCRIPTION OF THE DRAWINGS

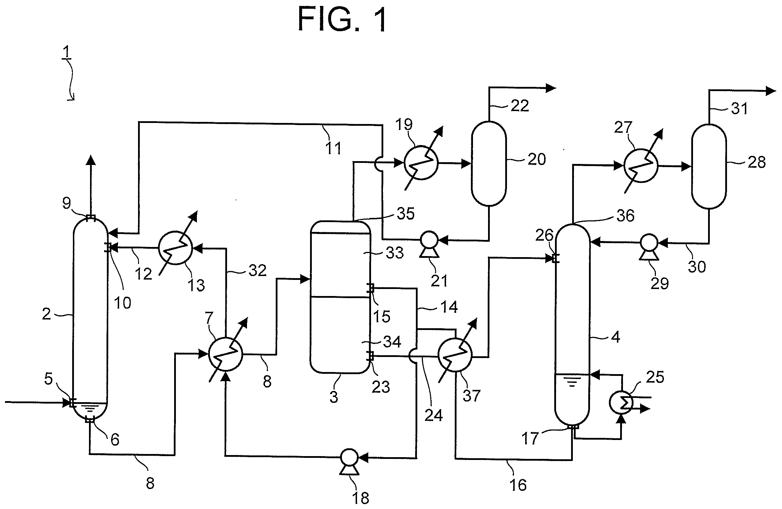

FIG. 1 is a schematic diagram of an acid gas removal apparatus.

### DETAILED DESCRIPTION

The invention relates to an acid gas removal method in accordance with claim 1.

An acid gas removal apparatus disclosed herein includes: an absorption tower; a first heater; a phase separation tank; a second heater; a regeneration tower; and a third heater. The absorption tower brings gas containing acid gas into contact with an acid gas absorbent composed of a solution containing a thermosensitive nitrogen-containing compound represented by the formula (1) and having a lower critical solution temperature at a predetermined temperature to absorb the acid gas into the acid gas absorbent and to remove the acid gas from the gas. The first heater heats the acid gas absorbent that has absorbed the acid gas to the lower critical solution temperature of the solution or more. The phase separation tank phase-separates the heated acid gas absorbent into a rich absorbent phase and a lean absorbent phase, and the lean absorbent phase contains more of the thermosensitive nitrogen-containing compound than the rich absorbent phase. The second heater heats the rich absorbent phase. The regeneration tower releases the acid gas in the rich absorbent phase. The third heater is provided at the regeneration tower and heats the rich absorbent phase. 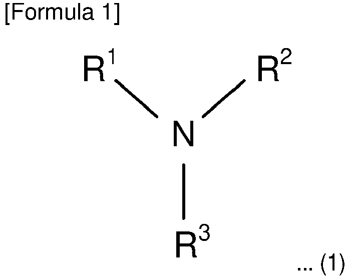 In the formula (1), R¹ is a hydroxyalkyl group, R² is a non-substituted cyclic alkyl group whose carbon number is 3 to 10, and R³ is a hydrogen atom or a non-substituted alkyl group.

An acid gas removal method according to an embodiment includes: an absorption process, a phase separation process; and a regeneration process. In the absorption process, gas containing acid gas and an acid gas absorbent composed of a solution containing a thermosensitive nitrogen-containing compound represented by the formula (1) and having a lower critical solution temperature are brought into contact at a predetermined temperature to absorb the acid gas into the acid gas absorbent and to remove the acid gas from the gas. In the phase separation process, the acid gas absorbent that has absorbed the acid gas is heated to the lower critical solution temperature of the solution or more to phase-separate the heated acid gas absorbent into a rich absorbent phase and a lean absorbent phase, and the lean absorbent phase contains more of the thermosensitive nitrogen-containing compound than the rich absorbent phase. In the regeneration process, the rich absorbent phase is heated to release the acid gas in the rich absorbent phase.

For example, an apparatus to separate and recover CO₂ that is the acid gas is installed to be added to an existing power generation facility, and so on, and therefore, it is required to decrease an operation cost of the apparatus as much as possible. According to investigation results of the present inventors up to now, thermal energy corresponding to 20% to 30% of a power generation amount is required for the separation and recovery of CO₂, and it is desired to decrease the thermal energy required for the separation and recovery. In particular, when CO₂ is released from an absorbent that has absorbed CO₂ to regenerate the absorbent, a lot of thermal energy is required, and therefore, it is important how to minimize the thermal energy.

The present inventors focused on a point that water is contained approximately 50 mass% in the acid gas absorbent that has absorbed the acid gas, so evaporation of water occurs when the acid gas is released from the acid gas absorbent at the regeneration, and a lot of thermal energy as heat of evaporation of water is required to regenerate the acid gas absorbent. An acid gas removal apparatus and an acid gas removal method of a liquid-liquid phase separation type are attained in which a solution containing a thermosensitive nitrogen-containing compound represented by the formula (1) and having a lower critical solution temperature (LCST) is used as an acid gas absorbent, the lower critical solution temperature of the solution is utilized, the acid gas absorbent that has absorbed the acid gas is set to be a temperature of the lower critical solution temperature or more, and thereby, phase separation is performed into a rich absorbent phase in which an acid gas concentration is high and a lean absorbent phase in which the acid gas concentration is low, and thereafter, the rich absorbent phase is regenerated.

An acid gas removal apparatus is explained with reference to FIG. 1. FIG. 1 is a schematic diagram of the acid gas removal apparatus according to the embodiment. An acid gas removal apparatus 1 illustrated in FIG. 1 is an apparatus for separating and recovering acid gas in gas containing the acid gas, such as CO₂ gas and hydrogen sulfide gas, in exhaust combustion gas and so on generated from facilities using fossil fuels such as a thermal power station by using an acid gas absorbent. Hereinafter, the acid gas removal apparatus 1 is explained while using a case when the acid gas is CO₂ as an example unless otherwise specified, but it is not limited thereto.

The acid gas removal apparatus 1 includes an absorption tower 2, a heat exchanger 7 as a first heater, a phase separation tank 3, a heat exchanger 37 as a second heater, a regeneration tower 4, and a heater 25 as a third heater. At the absorption tower 2, gas containing acid gas and an acid gas absorbent are brought into gas-liquid contact at a predetermined temperature, preferably at lower than a later-described LCST, the acid gas in the gas is absorbed by the acid gas absorbent, to remove the acid gas from the gas. At the heat exchanger 7, the acid gas absorbent that has absorbed the acid gas is heated. At the phase separation tank 3, the acid gas absorbent heated at the heat exchanger 7 is phase-separated into a rich absorbent phase and a lean absorbent phase whose content of the thermosensitive nitrogen-containing compound is higher than the rich absorbent phase. At the heat exchanger 37 as a second heater, the rich absorbent phase is heated. At the regeneration tower 4, the rich absorbent phase is heated, preferably heated at a temperature higher than the heat exchanger 37, the acid gas is separated from the rich absorbent phase, the separated acid gas is recovered, and the acid gas absorbent is regenerated. The heater 25 heating the rich absorbent phase in the regeneration tower 4 is provided at a lower part of the regeneration tower 4.

A gas supply port 5 which introduces the gas containing the acid gas being a process object is provided at a lower part of the absorption tower 2. In addition, a discharge port 6 discharging the acid gas absorbent in the absorption tower 2 is provided at a tower bottom part of the absorption tower 2. A liquid transfer pipe 8 which transfers the acid gas absorbent to the phase separation tank 3 via the heat exchanger 7 is connected to the discharge port 6.

As it is described later, a gas discharge port 9 discharging the gas after the acid gas is removed, and a supply port 10 charging a new acid gas absorbent and supplying the acid gas absorbent which is separated or regenerated at the phase separation tank 3 and the regeneration tower 4 are respectively provided at an upper part of the absorption tower 2. In addition, a reflux water line 11 which cools vapor generated at the phase separation tank 3 to make it flow back to the absorption tower 2 is connected to the absorption tower 2. Note that a predetermined amount of the new acid gas absorbent is charged into the absorption tower 2, for example, at an operation start time of the acid gas removal apparatus 1, and after that, it is cyclically used while being used and regenerated. In the case where the acid gas absorbent in the absorption tower 2 does not satisfy a predetermined amount, a necessary amount of the new acid gas absorbent is appropriately charged additionally therein.

The supply port 10 supplying the acid gas absorbent to the absorption tower 2 is connected to an absorbent cooler 13 by a liquid transfer pipe 12. Further, the absorbent cooler 13 is connected to an outlet port 15 of a lean absorbent phase 33 provided at the phase separation tank 3 via a liquid transfer pipe 32 and a liquid transfer pipe 14. After the lean absorbent phase 33 in the phase separation tank 3 is discharged from the outlet port 15, the lean absorbent phase 33 is transferred to the absorption tower 2 via the liquid transfer pipe 14, a liquid transfer pipe 32 and the liquid transfer pipe 12. At this time, at the heat exchanger 7, the lean absorbent phase 33 is heat-exchanged for the acid gas absorbent absorbing the acid gas that is transferred via the liquid transfer pipe 8. The absorbent cooler 13 is connected to an outlet port 17 provided at the lower part of the regeneration tower 4 via the liquid transfer pipe 32, the heat exchanger 7, the heat exchanger 37 and a liquid transfer pipe 16. The rich absorbent phase 34 in the phase separation tank 3 is heated at the heat exchanger 37 to be transfer to a supply port 26 provided at the regeneration tower 4. In the liquid transfer pipe 14, a pump 18 is interposed, and the acid gas absorbent regenerated in the regeneration tower 4 and the lean absorbent phase 33 discharged from the phase separation tank 3 are joined with each other to be transferred to the absorption tower 2. As stated above, the acid gas absorbent which is separated or regenerated at the phase separation tank 3 and the regeneration tower 4 is supplied to the absorption tower 2 via the absorbent cooler 13.

At the upper part of the phase separation tank 3, a discharge port 35 which discharges the CO₂ separated from the acid gas absorbent in the phase separation tank 3 and the vapor generated by the heating out of the phase separation tank 3 is provided. The phase separation tank 3 is connected to a reflux cooling mechanism which separates CO₂ and water via the discharge port 35. The reflux cooling mechanism includes a reflux cooler 19 which cools the CO₂ gas containing vapor discharged from the phase separation tank 3, a reflux drum 20 which houses the cooled CO₂ and water, the reflux water line 11 which transfers the reflux water from the reflux drum 20 to the absorption tower 2, and a reflux water pump 21 which is interposed in the reflux water line 11. A recovery carbon dioxide line 22 recovering CO₂ from which the vapor is removed is connected to the reflux drum 20. The reflux water line 11 may be directly connected to the absorption tower 2, or may be connected to the liquid transfer pipe 12.

An outlet port 23 which discharges a rich absorbent phase 34 is provided at a lower part of the phase separation tank 3. The phase separation tank 3 may include a heater which heats the acid gas absorbent in the phase separation tank 3.

At a tower top part of the regeneration tower 4, a discharge port 36 which discharges the CO₂ separated from the acid gas absorbent in the regeneration tower 4 and the vapor generated by the heating out of the regeneration tower 4 is provided. The regeneration tower 4 is connected to a reflex cooling mechanism similar to the reflux cooling mechanism provided at the phase separation tank 3, namely, such a reflux cooling mechanism including a reflux cooler 27, a reflux drum 28, a reflux water line 30, and a reflux water pump 29 via the discharge port 36. Reflux water in the reflux drum 28 is refluxed to the regeneration tower 4 by the reflux water line 30. A recover carbon dioxide line 31 recovering CO₂ from which the vapor is removed is connected to the reflux drum 28.

The acid gas absorbent composed of the solution containing the thermosensitive nitrogen-containing compound and having the lower critical solution temperature is separated into two phases whose thermosensitive nitrogen-containing compound concentrations are different from each other at a temperature of the lower critical solution temperature or more, namely, into the rich absorbent phase and the lean absorbent phase. In this embodiment, the rich absorbent phase is a phase whose concentration of the thermosensitive nitrogen-containing compound is low and whose CO₂ absorption amount is large between the two phases into which the acid gas absorbent absorbing the acid gas is separated as described above. The lean absorbent phase is a phase whose concentration of the thermosensitive nitrogen-containing compound is high and whose CO₂ absorption amount is small compared to the rich absorbent phase constituting another phase between the above-described two phases.

The acid gas absorbent used in the embodiment is a chemical absorbent to absorb and recover acid gas such as CO₂ gas and hydrogen sulfide gas in the gas containing the acid gas.

The acid gas absorbent of the embodiment contains the thermosensitive nitrogen-containing compound described below. The thermosensitive nitrogen-containing compound used in the embodiment is a compound represented by the following formula (1) (hereinafter, to be referred to as a thermosensitive nitrogen-containing compound (A)). The thermosensitive nitrogen-containing compound (A) is a compound which exhibits thermosensitivity in solubility with water and has an acid gas absorption property.

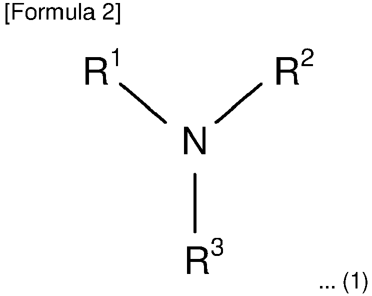

In the formula (1), R¹ is a hydroxyalkyl group, R² is a non-substituted cyclic alkyl group whose carbon number is 3 to 10, and R³ is a hydrogen atom or a non-substituted alkyl group.

The solution containing the thermosensitive nitrogen-containing compound (A) has the lower critical solution temperature. Namely, the thermosensitive nitrogen-containing compound (A) exhibits water-solubility at less than the LCST and exhibits non-water-solubility at the LCST or more. Note that in this specification, the "water-solubility" means that it is soluble in water, and specifically, means to be dissolved for 0.3 parts by mass or more relative to 1 part by mass of water.

Here, the LCST indicates a temperature when a liquid with one liquid phase is phase-separated into two liquid phases by an increase of a temperature. In other words, the solution of the thermosensitive nitrogen-containing compound (A) used in the embodiment has a characteristic exhibiting compatibility at less than the LCST and non-compatibility at the LCST or more, namely a characteristic causing the phase separation (phase separation property).

In the embodiment, the acid gas absorbent that has absorbed the acid gas is heated to the LCST or more as described later, and thereby, it is possible to phase-separate the acid gas absorbent into the rich absorbent phase whose acid gas concentration is high and the lean absorbent phase whose acid gas concentration is low compared to the rich absorbent phase.

In this phase separation process, a part of the acid gas in the acid gas absorbent is released from the acid gas absorbent. Further, the rich absorbent phase which is taken out after the phase separation is heated, and thereby, remaining acid gas in the rich absorbent phase is released from the rich absorbent phase. On the other hand, the lean absorbent phase is in a state in which the acid gas is fully removed even if the lean absorbent phase is not heated, and therefore, the lean absorbent phase is able to be reused as the acid gas absorbent in the absorption tower as it is without heating. As stated above, only the rich absorbent phase is heated to be regenerated, and thereby, it is possible to decrease an amount of the acid gas absorbent to be heated. Thereby, in the embodiment, it is possible to decrease the energy required for the separation and recovery of the acid gas compared to a conventional method in which a whole quantity of the acid gas absorbent is heated.

In the formula (1), R¹ is a hydroxyalkyl group, and mainly imparts a hydrophilic property to the thermosensitive nitrogen-containing compound (A). The alkyl group constituting R¹ is a straight chain or a branched chain. The number of hydroxy group of R¹ is not particularly limited as long as the number is one or more, and a binding site of the hydroxy group to the alkyl group is not also particularly limited. The number and the binding site of the hydroxy group of R¹ may be appropriately selected depending on the LCST, the phase separation property of the solution, and the acid gas absorption property. The carbon number of R¹ is preferably 2 to 4, and R¹ is more preferably a hydroxyethyl group, a 2-hydroxypropyl group, a 3-hydroxypropyl group, or 2,3-dihydroxypropyl group, and further preferably a hydroxyethyl group from viewpoints of the acid gas absorption property and the phase separation property.

In the formula (1), R² is a non-substituted cyclic alkyl group whose carbon number is 3 to 10, and more preferably the non-substituted cyclic alkyl group whose carbon number is 3 to 8. Various reaction products are generated by a reaction of the thermosensitive nitrogen-containing compound (A) and the acid gas, and thereby, the acid gas absorbent absorbs the acid gas. When the thermosensitive nitrogen-containing compound (A) has a steric hindrance, the steric hindrance of the thermosensitive nitrogen-containing compound (A) largely affects the kinds of the generated reaction products. For example, when the thermosensitive nitrogen-containing compound (A) absorbs CO₂, the steric hindrance of the thermosensitive nitrogen-containing compound (A) advantageously acts on generation of bicarbonate ions. Heat of the reaction to generate the bicarbonate ions from the thermosensitive nitrogen-containing compound (A) and CO₂ is relatively low. Accordingly, the thermosensitive nitrogen-containing compound (A) has a proper steric hindrance, and thereby, it is possible to decrease the heat of reaction in which the acid gas absorbent absorbs the CO₂ and to improve the CO₂ absorption property.

In the formula (1), R² imparts the proper steric hindrance to the thermosensitive nitrogen-containing compound (A), and thereby, R² functions to improve the acid gas absorption property of the acid gas absorbent. R² is the cyclic alkyl group, and thereby, it is possible to have a structure whose steric hindrance is large to have an excellent acid gas absorption property compared to a case when, for example, R² is a chain alkyl group.

As R², a cyclopropyl group, a cyclobutyl group, a cyclopentyl group, and a cyclohexyl group are preferable among the above-described cyclic alkyl group from the viewpoints of the acid gas absorption property and the phase separation property. In particular, the cyclopentyl group and the cyclohexyl group are preferable, and in this case, it is possible to impart high steric hindrance to the thermosensitive nitrogen-containing compound (A) while the thermosensitive nitrogen-containing compound (A) keeps fine solubility for water as a solvent. Accordingly, at the absorption of the acid gas, it is possible to increase an effect of decreasing the heat of reaction and to obtain the excellent acid gas absorption property.

In the formula (1), R³ is a hydrogen atom or a non-substituted alkyl group. R³ is able to be appropriately selected in accordance with the acid gas absorption property and the phase separation property required for the thermosensitive nitrogen-containing compound (A), for example, in consideration of an interaction and so on with physical properties exhibited by R¹ and R². Specifically, R³ is preferably the hydrogen atom or the alkyl group whose carbon number is 1 to 3, and more preferably the hydrogen atom or a methyl group. Further, when R² is the cyclopentyl group, the cyclohexyl group, a cycloheptyl group, or a cyclooctyl group, the thermosensitive nitrogen-containing component (A) exhibits the fine phase separation property while exhibiting fine acid gas absorption property if R³ is the methyl group.

As the thermosensitive nitrogen-containing compound (A), from the viewpoints of the phase separation property and the acid gas absorption property, there are suitably used, 2-(cyclopentylamino)ethanol, 1-(cyclopentylamino)-2-propanol, 3-(cyclopentylamino)-1,2-propanediol, 4-(cyclopentylamino)-1-butanol, 2-(cyclohexylamino)ethanol, 1-(cyclohexylamino)-2-propanol, 3-(cyclohexylamino)-1,2-propanediol, 2-(cycloheptylamino)ethanol, 1-(cycloheptylamino)-2-propanol, 1-(cycloheptylamino)-1,2-propanediol, 2-(cyclooctylamino)ethanol, 3-(cyclooctylamino)-1,2-propanediol, 3-(cyclohexylamino)-1-propanol, 2-(N-cyclopentyl-N-methylamino)ethanol, 1-(N-cyclopentyl-N-methylamino)-2-propanol, 3-(N-cyclopentyl-N-methylamino)-1,2-propanediol, 4-(N-cyclopentyl-N-methylamino)-1-butanol, 2-(N-cyclohexyl-N-methylamino)ethanol, 1-(N-cyclohexyl-N-methylamino)-2-propanol, 3-(N-cyclohexyl-N-methylamino)-1,2-propanediol, 2-(N-cycloheptyl-N-methylamino)ethanol, 1-(N-cycloheptyl-N-methylamino)-2-propanol, 3-(N-cycloheptyl-N-methylamino)-1,2-propanediol, 2-(N-cyclooctyl-N-methylamino)ethanol, 3-(N-cyclooctyl-N-methylamino)-1,2-propanediol, 3-(N-cyclohexyl-N-methylamino)-1-propanol, 2-(N-cyclopentyl-N-ethylamino)ethanol, 1-(N-cyclopentyl-N-ethylamino)-2-propanol, 3-(N-cyclopentyl-N-ethylamino)-1,2-propanediol, 4-(N-cyclopentyl-N-ethylamino)-1-butanol, 2-(N-cyclohexyl-N-ethylamino)ethanol, 1-(N-cyclohexyl-N-ethylamino)-2-propanol, 3-(N-cyclohexyl-N-ethylamino)-1,2-propanediol, 2-(N-cycloheptyl-N-ethylamino)ethanol, 1-(N-cycloheptyl-N-ethylamino)-2-propanol, 3-(N-cycloheptyl-N-ethylamino)-1,2-propanediol, 2-(N-cyclooctyl-N-ethylamino)ethanol, 3-(N-cyclooctyl-N-ethylamino)-1,2-propanediol, and 3-(N-cyclohexyl-N-ethylamino)-1-propanol, and so on.

Among the above-described thermosensitive nitrogen-containing component (A), 2-(N-cyclopentyl-N-methylamino)ethanol, 2-(N-cyclohexyl-N-methylamino)ethanol, 2-(N-cyclooctyl-N-methylamino)ethanol, and 3-(N-cyclohexyl-N-methylamino)-1-propanol are more preferable.

The LCST is preferably 50°C or more and 100°C or less, and more preferably 50°C or more and 80°C or less. When the LCST exceeds 100°C, a heating temperature of the acid gas absorbent when the phase separation into the rich absorbent phase and the lean absorbent phase occurs becomes high, and energy used to release the acid gas increases. On the other hand, when the LCST becomes lower than 50°C, the acid gas absorbent absorbs the acid gas under a phase separated state, and therefore, an absorption efficiency of the acid gas is lowered.

As described below, the acid gas absorbent composed of the solution of the thermosensitive nitrogen-containing compound (A) is able to release a part of the absorbed acid gas from the acid gas absorbent at a relatively low temperature, for example, even at approximately 50°C. Therefore, when the LCST exceeds 100°C, it is estimated that a major part of the absorbed acid gas that has been absorbed at the phase separation is released, and after the phase separation, it is not necessary to remove the acid gas from the rich absorbent phase. Namely, there is little difference from the conventional method in which a whole of the acid gas absorbent is heated to release the acid gas, and there is a possibility in which an advantage to decrease the energy required for the release of the acid gas disappears compared to the conventional method.

The acid gas absorbent of the embodiment is prepared by dissolving the above-described thermosensitive nitrogen-containing compound (A) in water as a solvent. The water is not particularly limited, and mainly ion-exchange water is used.

A content of the thermosensitive nitrogen-containing compound (A) in the acid gas absorbent is 15 mass% to 50 mass%, and preferably 20 mass% to 50 mass% relative to a whole quantity of the acid gas absorbent. In general, when an amine compound is used as the thermosensitive nitrogen-containing compound used in the embodiment, an absorption amount and a desorption amount of the acid gas per unit volume of the acid gas absorbent are larger and an absorption rate and a desorption rate of the acid gas are faster as a concentration of the amine component is higher. Thus, this is preferable in view of decreasing an energy consumption amount and a size of a plant facility, and improving process efficiency. However, it becomes impossible for the water contained in the acid gas absorbent to fully exhibit a function as an activator for the acid gas absorption when the concentration of the amine component in the acid gas absorbent is too high. Also, defects such as an increase in viscosity of the acid gas absorbent become not negligible when the concentration of the amine component in the acid gas absorbent is too high. When the content of the thermosensitive nitrogen-containing compound (A) relative to the whole quantity of the acid gas absorbent is 50 mass% or less, phenomena such as the increase in viscosity of the acid gas absorbent and the deterioration of the function of water as the activator are not recognized. Further, by setting the content of the thermosensitive nitrogen-containing compound (A) to 15 mass% or more, it is possible to obtain sufficient absorption amount and absorption rate for the acid gas absorbent, and to obtain excellent process efficiency.

When the content of the thermosensitive nitrogen-containing compound (A) relative to the whole quantity of the acid gas absorbent is 15 mass% to 50 mass%, not only the CO₂ absorption amount and the CO₂ absorption rate are high but also the CO₂ desorption amount and the CO₂ desorption rate are high in the acid gas absorbent used for the CO₂ recovery. Therefore, it is advantageous in that the recovery of CO₂ can be performed efficiently.

It is preferable that the acid gas absorbent of the embodiment further contains one kind or more of compounds selected from amino alcohols, heterocyclic amines and polyvalent amines as a reaction accelerator. The above-described reaction accelerators are each water soluble compounds having an amino group in molecules.

Among the amino groups, as to a secondary or tertiary amino group, a nitrogen atom constituting the amino group is bound to CO₂ to form a carbamate ion in a reaction with CO₂, and thereby, it contributes to the improvement of the absorption rate at an initial stage of the reaction between the thermosensitive nitrogen-containing compound and the acid gas. Further, the nitrogen atom of the secondary amino group has a role of converting the CO₂ bound to the nitrogen atom into a bicarbonate ion (HCO₃⁻), and contributes to the improvement of the rate at a latter half stage of the reaction. Accordingly, the above-described reaction accelerator is contained, and thereby, it is possible to improve the acid gas absorption property of the acid gas absorbent.

The amino alcohols in the embodiment are amines having one or more hydroxyalkyl groups as a substituent bound to the nitrogen atom, and it is not particularly limited as long as the amino alcohols are compounds exhibiting a reaction acceleration property and the water-solubility acting on the improvement in the acid gas absorption rate. The amino alcohols are preferably a primary or secondary amine, and in this case, it is preferable to have two hydroxyalkyl groups or the hydroxyalkyl group and the alkyl group as the substituents. The alkyl group and the hydroxyalkyl group may each be a straight chain or a branched chain. From viewpoints of the water-solubility and the reaction acceleration property, the carbon number of each of the alkyl group and the hydroxyalkyl group is preferably 1 to 8, and more preferably 2 to 4. When the amino alcohols have a plurality of substituents, these substituents may be the same or different.

As amino alcohols as described above, there can be used, for example, monoethanolamine, 2-amino-2-methyl-1-propanol, 2-amino-2-methyl-1,3-dipropanol, methylaminoethanol, ethylaminoethanol, propylaminoethanol, diethanolamine, 2-methylaminoethanol, 2-(ethylamino)ethanol, 2-propylaminoethanol, n-butylaminoethanol, 2-(isopropylamino)ethanol, 3-ethylaminopropanol, and so on.

Among the above, one whose reaction acceleration property is high and acid gas absorption amount is large is preferable as the amino alcohols, and in particular, 2-(isopropylamino)ethanol, 2-(ethylamino)ethanol, and 2-amino-2-methyl-1-propanol are preferable.

The heterocyclic amines in the embodiment are a saturated heterocyclic amine that is composed of one to four carbon atoms and one to three nitrogen atoms or a derivative thereof, and are compounds exhibiting the water-solubility.

The heterocyclic amine derivative is a compound having one or two or more substituents on a heterocycle of the heterocyclic amine. In the heterocyclic amine derivative, the substituent is preferably one kind or more selected from the hydroxy group, the alkyl group, the hydroxyalkyl group, and an aminoalkyl group. In this case, the carbon number of each of these substituents is preferably 1 to 3, and the methyl group, the ethyl group, a hydroxymethyl group, the hydroxyethyl group, an aminomethyl group, and an aminoethyl group are more preferable. Besides, a binding site of the substituent is not particularly limited, and it may be bound to any of the carbon atoms and the nitrogen atoms of the heterocycle. When the heterocyclic amine derivative has a plurality of substituents, these substituents may be the same or different.

The heterocyclic amine is generally a compound having volatility. The volatility of the heterocyclic amine derivative is suppressed by having the substituent at the heterocycle. On the other hand, the heterocyclic amine does not have the substituent at the carbon atom, and therefore, it is excellent in the reaction acceleration property compared to the heterocyclic amine derivative having the substituent. Accordingly, the heterocyclic amines may be appropriately selected from the above-described heterocyclic amines and the heterocyclic amine derivatives in accordance with properties required for the reaction accelerator.

Specifically, as the heterocyclic amines, there can be used the heterocyclic amine such as azetidine, pyrrolidine, piperidine, hexahydro-1H-azepine, hexamethylenetetramine, piperazine, and derivatives thereof. As the azetidine derivatives, there can be used 1-methylazetidine, 1-ethylazetidine, 2-methylazetidine, 2-azetidinemethanol, 2-(2-aminoethyl)azetidine, and so on. As the pyrrolidine derivatives, there can be used 1-methylpyrrolidine, 2-methylpyrrolidine, 2-butylpyrrolidine, 2-pyrrolidinemethanol, 2-(2-aminoethyl)pyrrolidine, and so on. As the piperidine derivatives, there can be used 1-methylpiperidine, 2-ethylpiperidine, 3-propylpiperidine, 4-ethylpiperidine, 2-piperidinemethanol, 3-piperidineethanol, 2-(2-aminoethyl)piperidine, and so on. As the piperazine derivatives, there can be used 2-methylpiperazine, 2,5-dimethylpiperazine, 2,6-dimethylpiperazine, 1-methylpiperazine, 1-(2-hydroxyethyl)piperazine, 1-(2-aminoethyl)piperazine, and so on.

Among them, the above-described piperazine and the piperazine derivatives are particularly desirable from viewpoints of improving the acid gas absorption amount and the absorption rate.

The polyvalent amines are each alkylamine which has a total of two or more primary and/or secondary amino groups in one molecule, and it is not particularly limited as long as the polyvalent amines are water-soluble compounds. As the polyvalent amines, for example, water-soluble polyalkylpolyamine and alkylpolyamine in which the carbon number of the alkyl group is preferably 3 to 8 can be used.

As the alkylpolyamine in which the carbon number of the alkyl group is preferably 3 to 8, specifically, there can be used propanediamine, butanediamine, pentamethylenediamine, hexamethylenediamine. As the water-soluble polyalkylpolyamine, polyalkylpolyamine in which carbon chain of the above-described alkylpolyamine are polymerized can be used. As the polyvalent amines, among the above, it is more preferable to be 1,3-propanediamine, 1,4-butanediamine, 1,3-pentamethylenediamine, 1,5-pentamethylenediamine, 1,6-hexamethylenediamine from viewpoints of improvement in the water-solubility and the reaction acceleration property.

In the embodiment, as the reaction accelerator, one kind of the above-described compounds may be independently used, or two or more kinds may be used together.

A content of the reaction accelerator is preferably 1 mass% to 15 mass% relative to the whole quantity of the acid gas absorbent. There is a possibility that the effect of improving the acid gas absorption rate cannot be fully obtained when the content of the reaction accelerator is less than 1 mass% relative to the whole quantity of the acid gas absorbent. When the content of the reaction accelerator exceeds 15 mass% relative to the whole quantity of the acid gas absorbent, there is a possibility that the reaction acceleration property decreases because the viscosity of the acid gas absorbent becomes excessively high.

When the above-described acid gas absorbent is used for the acid gas removal method and the acid gas removal apparatus according to the embodiment, a nitrogen-containing compound other than the above-described reaction accelerator to improve the acid gas absorption property, other compounds such as an anticorrosive of a phosphoric acid based material or the like to prevent corrosion of plant facilities, a defoamer of a silicone based material or the like to prevent effervescence, an antioxidant to prevent deterioration of the acid gas absorbent, a pH adjusting agent to adjust pH may be added to the acid gas absorbent within a range in which effects of the acid gas absorbent are not deteriorated. Besides, a pH value of the acid gas absorbent is preferably adjusted to 9 or more by adding the pH adjusting agent. The pH value of the acid gas absorbent is able to be adjusted as necessary depending on a kind, concentration, flow rate, or the like of the acid gas contained in the gas.

An acid gas removal method according to the embodiment is explained. The acid gas removal method of the embodiment includes: an absorption process; a phase separation process; and a regeneration process. In the absorption process, an acid gas absorbent composed of a solution containing a thermosensitive nitrogen-containing compound (A) represented by the formula (1) and having a lower critical solution temperature and gas containing acid gas are brought into contact with each other at a predetermined temperature, the acid gas is absorbed by the acid gas absorbent to thereby remove the acid gas from the gas. In the phase separation process, the acid gas absorbent absorbing the acid gas obtained in the absorption process is heated to the lower critical solution temperature of the solution or more, and is phase separated into a rich absorbent phase and a lean absorbent phase whose content of the thermosensitive nitrogen-containing compound is higher than the rich absorbent phase. In the regeneration process, the rich absorbent phase obtained in the phase separation process is heated, and thereby, the acid gas in the rich absorbent phase is released and recovered.

The acid gas removal method of the embodiment is explained below as for a case when the acid gas removal apparatus 1 illustrated in FIG. 1 is used. The gas containing the acid gas is introduced into the lower part of the absorption tower 2 via the gas supply port 5. A new acid gas absorbent is supplied from the supply port 10 at the upper part of the absorption tower 2 to be housed in the absorption tower 2.

The gas containing the acid gas is brought into gas-liquid contact with the acid gas absorbent at a predetermined temperature, preferably less than the LCST in the absorption tower 2, and thereby, the acid gas in the gas is absorbed and removed by the acid gas absorbent. The gas after the acid gas is removed is discharged outside of the absorption tower 2 from the gas discharge port 9.

The method to bring the gas into gas-liquid contact with the acid gas absorbent in the absorption tower 2 is not particularly limited. The method of the gas-liquid contact is performed by, for example, a method in which the gas is bubbled in the acid gas absorbent, a method in which the acid gas absorbent is atomized and sprayed in a flow of the gas (atomizing method, spraying method), a method in which the gas is brought into countercurrent contact with the acid gas absorbent in an absorption tower containing a filler made of a porcelain or a filler made of a metal net, or the like.

A temperature of the acid gas absorbent in the absorption tower 2 is preferably less than the LCST, specifically the room temperature or more and 60°C or less, more preferably the room temperature or more and 50°C or less, further preferably approximately 20°C to 45°C. The acid gas absorption amount of the acid gas absorbent tends to increase as the temperature of the acid gas absorbent in the absorption tower 2 is lower, but energy to reduce the temperature of the acid gas absorbent is necessary, and therefore, a lower limit value of the temperature of the acid gas absorbent is determined by a gas temperature, a heat recovery target and so on in the process. A pressure in the absorption tower 2 in the absorption process is preferably the atmospheric pressure. It is to suppress energy consumption required for pressurization, though it is possible to pressurize up to a higher pressure to increase the absorption performance of the acid gas absorbent. The heat generated at the acid gas absorption is transferred to the heater 25 to be used for the heating of the rich absorbent phase supplied to the regeneration tower 4.

In the absorption tower 2, the CO₂ absorption amount at 40°C of the acid gas absorbent containing 15 mass% to 50 mass% of the thermosensitive nitrogen-containing compound (A) is approximately 0.20 mol to 0.85 mol per 1 mol of the thermosensitive nitrogen-containing compound (A) contained in the acid gas absorbent. Further, in the absorption process, the CO₂ absorption rate per 1 mol of the thermosensitive nitrogen-containing compound (A) after a few minutes from the start of the absorption of CO₂ is approximately 0.006 mol/mol/min to 0.009 mol/mol/min in the acid gas absorbent containing 15 mass% to 50 mass% of the thermosensitive nitrogen-containing compound (A).

The CO₂ absorption amount is a value of an inorganic carbon amount in the acid gas absorbent measured by an infrared gas concentration measurement device. Further, the CO₂ absorption rate is a value measured by using an infrared carbon dioxide sensor at the time after a few minutes from the start of the absorption of CO₂.

The acid gas absorbent that has absorbed the acid gas in the absorption tower 2 is heated at the heat exchanger 7, and then transferred to the phase separation tank 3. The acid gas absorbent is heated to be thereby phase-separated, and separated into two phases of an acid gas absorbent phase whose acid gas concentration is high (rich absorbent phase) and an acid gas absorbent phase whose acid gas concentration is lower than the rich absorbent phase (lean absorbent phase) to be housed in the phase separation tank 3. At the heat exchanger 7, the acid gas absorbent which is regenerated from the rich absorbent phase at the regeneration tower 4 and the lean absorbent phase 33 from the phase separation tank 3, and the acid gas absorbent which has absorbed the acid gas in the absorption tower 2 are heat-exchanged, and thereby, the acid gas absorbent that has absorbed the acid gas is heated and the regenerated acid gas absorbent and the lean absorbent phase 33 are cooled. At the heat exchanger 37, the acid gas absorbent which is regenerated at the regeneration tower 4 and the rich absorbent phase 34 from the phase separation tank 3 are heat-exchanged, and thereby, the rich absorbent phase 34 is heated and the regenerated acid gas absorbent is cooled.

A temperature of the acid gas absorbent in the phase separation tank 3 (hereinafter, to be referred to as a tank temperature) is set to be the LCST or more of the solution of the thermosensitive nitrogen-containing compound (A). The tank temperature is preferably 50°C or more, more preferably 60°C or more, further preferably approximately 60°C to 100°C. As the tank temperature is higher, the desorption amount of the acid gas increases, and it is easy to be phase separated, but energy required for the heating of the acid gas absorbent increases if the tank temperature is increased. Accordingly, the tank temperature is determined by the gas temperature, the heat recovery target and so on in the process. Besides, from a viewpoint of reduction in the regeneration energy, the heating temperature of the acid gas absorbent in the phase separation process is preferably a heating temperature of the rich absorbent phase in a later-described regeneration process or less.

As stated above, a part of the acid gas in the acid gas absorbent is desorbed at the phase separation tank 3 accompanied by the phase separation. The lean absorbent phase whose acid gas concentration is extremely low is thereby obtained. The rich absorbent phase is supplied to the regeneration tower 4 from the supply port 26 provided at an upper part of the regeneration tower 4 by passing through a liquid transfer pipe 24 from the outlet port 23 provided at the lower part of the phase separation tank 3 in order to cyclically use (recycle) the remaining acid gas absorbent.

The lean absorbent phase of the phase separation tank 3 passes the liquid transfer pipe 14, is transferred to the absorbent cooler 13, and then cooled there. The cooled lean absorbent phase is returned to the absorption tower 2 through the liquid transfer pipe 12, and cyclically used (recycled) as the acid gas absorbent again.

The acid gas separated from the acid gas absorbent at the phase separation tank 3 is extracted from the discharge port 35 provided at the upper part of the phase separation tank 3 together with vapor generated at the phase separation tank 3, and is supplied to the reflux drum 20 via the reflux cooler 19. The mixed gas of the acid gas and vapor is cooled at the reflux cooler 19, and water generated by condensation of the vapor is returned to the absorption tower 2 by the reflux water pump 21 from the reflux drum 20 by passing through the reflux water line 11. The acid gas from which the vapor is removed is supplied to a process recovering the acid gas by the recovery carbon dioxide line 22. When the reflux water line 11 is connected to the liquid transfer pipe 12, the water is transferred to the absorption tower 2 together with the regenerated acid gas absorbent via the liquid transfer pipe 12.

The rich absorbent phase supplied to the regeneration tower 4 is flowed from the supply port 26 provided at the upper part of the regeneration tower 4 toward the lower part, and heated by the heater 25 (reboiler) provided at the lower part of the regeneration tower 4. During this process, the acid gas in the rich absorbent phase is released. The pure or high-concentration acid gas is thereby recovered, and the acid gas absorbent is regenerated.

As the regeneration tower 4, a distillation tower, a plate tower, a spray tower, and a packed tower containing a filler made of a porcelain or a filler made of a metal net can be used. For example, when the plate tower, the spray tower, and the packed tower are used, the rich absorbent phase is sprayed from the upper part of the regeneration tower 4, and thereby, it is possible to desorb the acid gas by spreading a liquid interface in the regeneration tower 4. It is thereby possible to isolate and release the acid gas from carbamate anion and bicarbonate ion bound to the thermosensitive nitrogen-containing compound (A).

The heating temperature of the rich absorbent phase at the regeneration tower 4 is preferably the tank temperature or more. Specifically, the heating temperature of the rich absorbent phase is preferably 70°C or more, more preferably 80°C or more, and further preferably approximately 90°C to 120°C. The desorption amount of the acid gas increases as the heating temperature of the rich absorbent phase is higher, but energy required for the heating of the rich absorbent phase increases if the heating temperature is increased. Therefore, the heating temperature of the rich absorbent phase at the regeneration tower 4 is determined by the gas temperature, the heat recovery target, and so on in the process. The regeneration process at the regeneration tower 4 is performed under a condition in which a pressure in the regeneration tower 4 is preferably 1 atmosphere or more and 3 atmospheres or less, more preferably 1 atmosphere or more and 2 atmospheres or less from a viewpoint of suppressing evaporation of the water.

The CO₂ desorption amount at 70°C of the acid gas absorbent containing 15 mass% to 50 mass% of the thermosensitive nitrogen-containing compound (A) is approximately 50% or more of the absorbed CO₂.

The acid gas absorbent regenerated at the regeneration tower 4 passes through the liquid transfer pipe 16 from the outlet port 17 provided at the lower part of the regeneration tower 4, is transferred to the heat exchanger 7 and the absorbent cooler 13 by the pump 18, and then returned to the absorption tower 2 from the liquid transfer pipe 12 together with the lean absorbent phase. Note that at the absorbent cooler 13, the regenerated acid gas absorbent is cooled to 30°C to 50°C.

The acid gas separated from the acid gas absorbent at the regeneration tower 4 is extracted from the discharge port 36 provided at the upper part of the regeneration tower 4 together with the vapor generated at the regeneration tower 4, and is supplied to the reflux drum 28 via the reflux cooler 27. The mixed gas of the acid gas and vapor is cooled at the reflux cooler 27, and water generated by condensation of the vapor is returned to the regeneration tower 4 from the reflux drum 28 by the reflux water pump 29. The acid gas from which the vapor is removed is supplied to a process recovering the acid gas by the recovery carbon dioxide line 31.

Purity of the acid gas recovered by the recovery carbon dioxide line 31 as stated above is extremely high, which is for example, approximately 95 vol% to 99 vol%. The pure acid gas or high-concentration acid gas is used as chemicals, synthetic raw materials of high polymer, a coolant for freezing foods, and so on. In addition, it is also possible to isolate and store the recovered acid gas in an underground or the like that is currently technically developed.

Among the above-described processes, the processes of separating the acid gas from the acid gas absorbent and regenerating the acid gas absorbent, namely, the phase separation process and the regeneration process are parts consuming the largest amount of energy. In these processes, approximately 50% to 80% of the energy consumed in all of the processes is consumed. Thus, according to the acid gas removal method of the embodiment, it is possible in the phase separation process to separate approximately 50% or more of the acid gas in the acid gas absorbent at a temperature lower than the regeneration process, and therefore, it is possible to decrease the consumption energy at the regeneration process compared to the conventional technology. Therefore, it is possible to decrease the cost of the absorption and separation of the acid gas, and to advantageously perform the acid gas removal from the gas containing the acid gas from an economical viewpoint.

According to the acid gas removal apparatus of the embodiment, it is possible to perform the absorption and removal of the acid gas in low energy: by absorbing the acid gas into the acid gas absorbent which is excellent in the absorption property and desorption property for the acid gas at the absorption tower; phase-separating the acid gas absorbent to separate the rich absorbent phase whose acid gas concentration is high at the phase separation tank; and regenerating the rich absorbent phase separated from the acid gas absorbent at the regeneration tower.

According to the embodiment, it is possible to decrease the energy required to separate and regenerate the acid gas by using the acid gas absorbent according to the above-described embodiment. Therefore, it is possible to perform the removal of the acid gas from the gas containing the acid gas and the regeneration of the acid gas absorbent under an economically advantageous condition.

### [Examples]

Hereinafter, the present invention will be explained in more detail with reference to examples and comparative examples. Incidentally, the present invention is not limited to these examples.

### (EXAMPLE 1)

An acid gas absorbent was prepared by dissolving 45 parts by mass of 2-(N-cyclopentyl-N-methylamino)ethanol and 5 parts by mass of piperazine in 50 parts by mass of water. Then, gas containing approximately 10 vol% of CO₂ gas at 40°C was aerated in the obtained acid gas absorbent at a flow rate of 0.5 L/min for approximately two hours to absorb the CO₂ gas into the acid gas absorbent. The total CO₂ gas absorption amount of the acid gas absorbent was 36 NL/L. After that, the acid gas absorbent containing the CO₂ gas was gradually heated to 80°C to phase-separate the acid gas absorbent into the rich absorbent phase and the lean absorbent phase. At this time, 70% of the CO₂ gas from among the total CO₂ gas absorption amount which had been initially absorbed by the acid gas absorbent was released. The volume ratio of the rich absorbent phase and the lean absorbent phase of the phase-separated acid gas absorbent was 4 to 6, and respective CO₂ gas absorption amounts were 21 NL/L, 10 NL/L. Further, the rich absorbent phase and the lean absorbent phase were separated from each other. The rich absorbent phase was only heated to 100°C, and then 20% of the CO₂ gas from among the absorbed total CO₂ gas absorption amount was released. As a result, it turned out that the acid gas absorbent released the CO₂ gas of 90% or more at 100°C from among the total CO₂ gas absorption amount which had been initially absorbed by the acid gas absorbent.

### (EXAMPLE 2)

The removal of CO₂ was performed under the same condition as EXAMPLE 1 except that 2-(N-cyclohexyl-N-methylamino)ethanol was used in place of 2-(N-cyclopentyl-N-methylamino)ethanol. As a result, the acid gas absorbent released the CO₂ gas of approximately 71% at 80°C from among the total CO₂ gas absorption amount which had been initially absorbed by the acid gas absorbent, and released the CO₂ gas of 90% or more at 100°C.

### (EXAMPLE 3)

The removal of CO₂ was performed under the same condition as EXAMPLE 1 except that 2-(N-cyclooctyl-N-methylamino)ethanol was used in place of 2-(N-cyclopentyl-N-methylamino)ethanol. As a result, the acid gas absorbent released the CO₂ gas of approximately 65% at 80°C from among the total CO₂ gas absorption amount which had been initially absorbed by the acid gas absorbent, and released the CO₂ gas of 90% or more at 100°C.

### (EXAMPLE 4)

The removal of CO₂ was performed under the same condition as EXAMPLE 1 except that 3-(N-cyclohexyl-N-methylamino)-1-propanol was used in place of 2-(N-cyclopentyl-N-methylamino)ethanol. As a result, the acid gas absorbent released the CO₂ gas of approximately 69% at 80°C from among the total CO₂ gas absorption amount which had been initially absorbed by the acid gas absorbent, and released the CO₂ gas of 90% or more at 100°C.

### (COMPARATIVE EXAMPLE 1)

The removal of CO₂ was performed under the same condition as EXAMPLE 1 except that 2-(N-butyl-N-methylamino)ethanol was used in place of 2-(N-cyclopentyl-N-methylamino)ethanol. As a result, the acid gas absorbent released the CO₂ gas of approximately 50% at 80°C from among the total CO₂ gas absorption amount which had been initially absorbed by the acid gas absorbent, and released the CO₂ gas of 80% at 100°C. Note that in COMPARATIVE EXAMPLE 1, the phase separation does not occur even at 100°C, and the release amount of the CO₂ gas was approximately 80%.

As it is obvious from the EXAMPLEs and COMPARATIVE EXAMPLE, in the EXAMPLEs 1 to 4 each using the acid gas absorbent used for the embodiment, it turned out that the acid gas absorbent was able to release the CO₂ of 90% or more at the high temperature of 100°C from among the total CO₂ gas absorption amount which had been initially absorbed by the acid gas absorbent, and to release the CO₂ of at least 65% or more even at 80°C. Further, it is possible to recover the CO₂ gas of 90% or more even if the total quantity of the acid gas absorbent is not heated, and therefore, it turned out that the regeneration energy of the acid gas absorbent is able to be reduced.

## Claims

1. An acid gas removal method comprising:
an absorption process of bringing gas containing acid gas into contact with an acid gas absorbent at a predetermined temperature to absorb the acid gas into the acid gas absorbent and to remove the acid gas from the gas, the acid gas absorbent made of a thermosensitive nitrogen-containing compound dissolved in water, the content of said compound ranging from 15 to 50 mass%, the thermosensitive nitrogen-containing compound being represented by the following formula (1) and having a lower critical solution temperature, the lower critical solution temperature indicating a temperature when a liquid with one liquid phase is phase-separated into two liquid phases by an increase of a temperature;
a phase separation process of heating the acid gas absorbent that has absorbed the acid gas to the lower critical solution temperature of the solution or more to phase-separate the heated acid gas absorbent into a rich absorbent phase and a lean absorbent phase, the lean absorbent phase containing more of the thermosensitive nitrogen-containing compound than the rich absorbent phase; and
a regeneration process of heating the rich absorbent phase to release the acid gas in the rich absorbent phase. 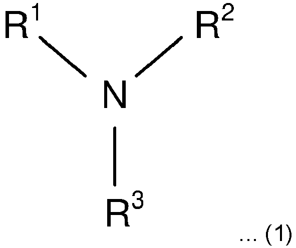
(In the formula (1), R¹ is a hydroxyalkyl group, R² is a non-substituted cyclic alkyl group whose carbon number is 3 to 10, and R³ is a hydrogen atom or a non-substituted alkyl group.)

2. The acid gas removal method according to claim 1,
wherein a temperature heating the rich absorbent phase is a temperature higher than that of the phase separation process.

## Patentansprüche

1. Verfahren zum Entfernen von saurem Gas, umfassend:
einen Absorptionsprozess, in dem Gas, das saures Gas enthält, bei einer vorbestimmten Temperatur mit einem Sauergas-Absorptionsmittel in Kontakt gebracht wird, um das saure Gas in dem Sauergas-Absorptionsmittel zu absorbieren und das saure Gas aus dem Gas zu entfernen, wobei das Sauergas-Absorptionsmittel aus einer temperaturempfindlichen, Stickstoff enthaltenden, in Wasser aufgelösten Verbindung besteht, wobei der Gehalt der Verbindung im Bereich von 15 bis 50 Masseprozent liegt, die temperaturempfindliche, Stickstoff enthaltende Verbindung dargestellt wird durch die folgende Formel (1) und eine untere kritische Lösungstemperatur aufweist, wobei die untere kritische Lösungstemperatur eine Temperatur angibt, bei der eine Flüssigkeit mit einer einzigen flüssigen Phase durch eine Erhöhung einer Temperatur in zwei flüssige Phasen phasengetrennt wird;
einen Phasentrennungsprozess des Erhitzens des Sauergas-Absorptionsmittels, welches das saure Gas absorbiert hat, bis die untere kritische Lösungstemperatur der Lösung oder mehr erreicht ist, um das erhitzte Sauergas-Absorptionsmittel einer Phasentrennung in eine reiche Absorptionsmittelphase und eine arme Absorptionsmittelphase zu unterziehen, wobei die arme Absorptionsmittelphase mehr von der temperaturempfindlichen, Stickstoff enthaltenden Verbindung enthält als die reiche Absorptionsmittelphase; und
einen Regenerationsprozess der darin besteht, die reiche Absorptionsmittelphase zu erhitzen, um das saure Gas in der reichen Absorptionsmittelphase freizusetzen. 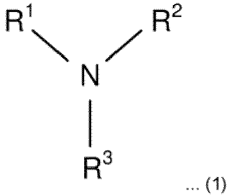
(In Formel (1) ist R¹ eine Hydroxyalkyl-Gruppe, R² ist eine nicht substituierte cyclische Alkyl-Gruppe, deren Kohlenstoffzahl 3 bis 10 beträgt, und R³ ist ein Wasserstoffatom oder eine nicht substituierte Alkyl-Gruppe).

2. Verfahren zum Entfernen von saurem Gas nach Anspruch 1,
wobei eine Temperatur des Erhitzens der reichen Absorptionsmittelphase eine Temperatur ist, die höher ist als diejenige des Phasentrennungsprozesses.

## Revendications

1. Procédé d'élimination de gaz acides comprenant :
un processus d'absorption qui consiste à mettre un gaz qui contient des gaz acides en contact avec un absorbant de gaz acides à une température prédéterminée pour absorber les gaz acides à l'intérieur de l'absorbant de gaz acides et pour éliminer les gaz acides du gaz, l'absorbant de gaz acides étant composé d'un composé thermosensible contenant de l'azote qui est dissout dans de l'eau, la teneur dudit composé allant de 15 à 50 % en masse, le composé thermosensible contenant de l'azote étant représenté par la formule qui suit (1) et présentant une température de solution critique inférieure, la température de solution critique inférieure indiquant une température lorsqu'un liquide qui présente une seule phase liquide est séparé en termes de phase en deux phases liquides au moyen d'une augmentation d'une température ;
un processus de séparation de phase qui consiste à chauffer l'absorbant de gaz acides qui a absorbé les gaz acides jusqu'à la température de solution critique inférieure de la solution ou au-delà pour séparer en termes de phase l'absorbant de gaz acides chauffé en une phase d'absorbant riche et une phase d'absorbant pauvre, la phase d'absorbant pauvre contenant plus du composé thermosensible contenant de l'azote que la phase d'absorbant riche ; et
un processus de régénération qui consiste à chauffer la phase d'absorbant riche pour libérer les gaz acides dans la phase d'absorbant riche. 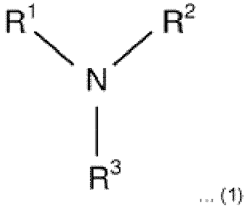
(Dans la formule (1), R¹ est un groupe hydroxyalkyle, R² est un groupe alkyle cyclique non substitué dont le nombre de carbones est compris entre 3 et 10 et R³ est un atome d'hydrogène ou un groupe alkyle non substitué.)

2. Procédé d'élimination de gaz acides selon la revendication 1,
dans lequel une température de chauffage de la phase d'absorbant riche est une température qui est supérieure à celle du processus de séparation de phase.
